# EUROPEAN PATENT SPECIFICATION

(11) **EP 0 594 909 B1**
(45) Date of publication and mention of the grant of the patent: **27.12.1996**
(21) Application number: 92309921.2
(22) Date of filing: 29.10.1992
(51) Int. Cl.: B60C 27/10

(54) **Tyre chain and method of mounting it**
Gleitschutzkette und Verfahren zum Montieren
Chaîne anti-dérapante et procédé du montage

(43) Date of publication of application: 04.05.1994
(73) Proprietor: YOSHIDA, Hirokazu, Osaka-shi, Osaka 534 (JP)
(72) Inventor: YOSHIDA, Hirokazu, Osaka-shi, Osaka 534 (JP)
(74) Representative: Gaunt, Robert John

(56) References cited:
- EP-A- 0 255 119
- DE-A- 3 723 889
- US-A- 2 593 018
- US-A- 4 304 280

## Description

This invention relates to a tyre chain and to a method of mounting it, and particular to an inside annular body to be arranged at the inside of a tyre in a tyre chain.

Regarding such an inside annular body of a tyre chain, "a contractile element of tyre chain" published in Japan under publication No. 56-160206 has been known as a contractile connector. In this contractile element the effective length of the chain is changeable within the range of a slit of a connecting plate and therefore when excessive force is applied to the chain on the occasion of jamming on the brakes, slip, etc., an end portion of the chain moves beyond a checking part of the slit and accordingly the effective length of the chain increases and the tyre chain will not function.

In US 2593018 an anti-skid chain is described in which a connector is secured to opposing ends of an inner chain section. The connector has within it a reel of flexible cable which is biased by means of a spring to wind the cable. The connector also includes cooperating abutments surfaces one of which is located at an end of the chain for holding the chain secured unless acted on by a pusher rod.

In EP-A-0255119 an alternative skid preventing device is described having retaining apparatus in the form of gripping members which engage the surface of a wire passing through the retaining apparatus to prevent movement of the wire unless acted on by a pusher member.

A first aspect of the invention of the present application is to provide a part of the inside annular body of tyre chain with a contractile connector which includes an elastic body to be connected and fixed to the inside annular body and a connecting member and a second connecting member which move along the elastic body.

A second aspect of the invention of the present application is a method of mounting a tyre chain on a tyre which comprises the steps of (1) putting the inside annular body 1 on the tyre from the upper side of the tyre, while locating the range of more than 180° of the inside annular body at the upper inside of the tyre on which the tyre chain is mounted and locating the remaining range of less than 180° of the inside annular body 1 at the lower outside of the tyre, (2) reversing the inside annular body 1 in up and down direction by a half turn of the tyre and (3) putting the contractile connector 2 in contracted and fixed state by moving the remaining part of the inside annular body 1 which is located at the upper outside of the tyre toward the inside of the tyre.

In order that the invention may be better understood, several embodiments thereof will now be described by way of example only and with reference to the accompanying drawings in which:-
Figure 1 is a partial perspective view of a tyre chain having an inside annular body according to a first embodiment of the present invention;
Figure 2 is a vertical section, showing the first embodiment of a contractile connector which is an important part of the present invention;
Figure 3 is a front view of the connector shown in Figure 2;
Figure 4 is a vertical section of a second embodiment of the contractile connector which is an important part of the present invention;
Figure 5 is a front view of the connector shown in Figure 4;
Figure 6 is a front view, partly in section, of a connecting and fixing tool in working state;
Figure 7 is a front view, showing the second embodiment of the inside annular body;
Figure 8 is a front view, showing a third embodiment of the inside annular body.
Figure 9 is an explanatory drawing, showing the method of mounting a tyre chain having the inside annular body of the first embodiment.
Figure 10 is an explanatory drawing, showing the method of mounting the tyre chain having the inside annular body of the second embodiment.

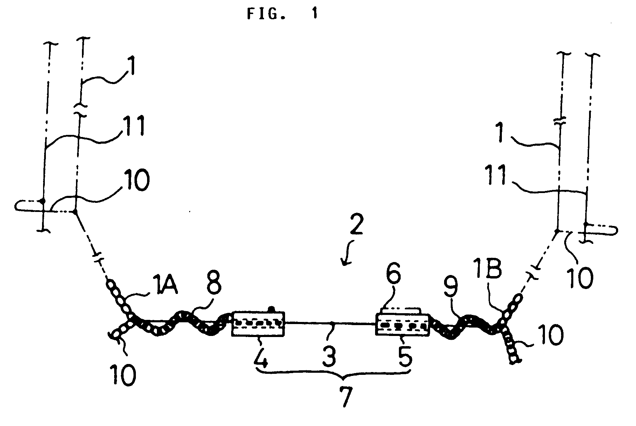

With reference to Figure 1, a contractile connector 2 is mounted on a part of an inside annular body 1. The contractile connector 2 is composed of an elastic body 3 whose both ends are connected and fixed to one end 1A and the other end 1B of the inside annular body 1, a first connecting member 4 (female member) which is connected to the one end 1A of the inside annular body 1 and moves along the elastic body 3, a second connecting member 5 (male member) which is connected to the other end 1B of the inside annular body 1 and moves along the elastic body 3 and a connecting and fixing tool 7 which has a lock mechanism 6 for connecting and fixing detachably the first connecting member 4 and the second connecting member 5 and for maintaining the connected and fixed state thereof. In Figure 1, reference numerals 10 and 11 denote a side chain and an outside annular body respectively. In the embodiment of Figure 1, the inside annular body 1 and the outside annular body 11 are chains made of metal or synthetic resin over their entire length. The elastic body 3 is an elastic rope. One end of the first connecting member (female member) 4 is connected to one end 1A of the inside annular body through the medium of a connecting chain 8 and one end of the second connecting member (male member) 5 is connected to the other end 1B of the inside annular body through the medium of a connecting chain 9. The connecting chain 8 and the connecting chain 9 are inserted in the elastic body 3, and the first connecting member (female member) 4 and the second connecting member (male member) 5 are made movable along the elastic body 3 by passing the elastic body (elastic rope) 3 through the first connecting member (female member) 4 and the second connecting member (male member) 5. Thus, the effective length of the inside annular body is capable of expansion and contraction within the range of the connecting chain 8 and the connecting chain 9.

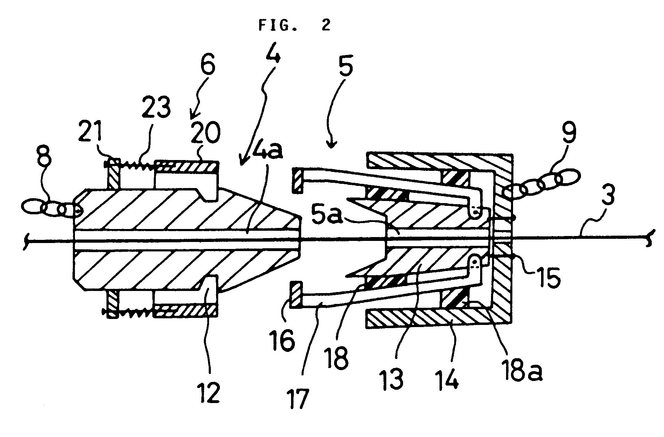

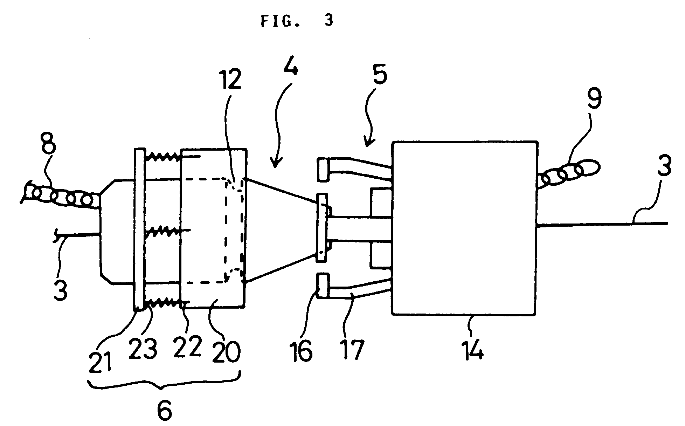

An explanation is given below of the first connecting member (female member) 4, the second connecting member (male member) 5 and the connecting and fixing tool 7, with reference to Figures 2 and 3.

The first connecting member (female member) 4 is a tubular body having at its central part a through-hole 4a through which the elastic body (elastic rope) 3 is passed and a checking groove 12 at its circumferential surface. The second connecting member 5 is composed of an inner tube 13 having a through-hole 5a and an outer tube 14 which are united by a screw 15, a movable piece 17 having a divided ring 16 which is engageable with the checking groove 12 of the first connecting member (female member) 4 and is inserted between the inner tube 13 and the outer tube 14. Under this composition, the divided ring 16 is urged toward the outer circumference by a ring elastic body 18 and the base part of the movable piece 17 is fixed to the inner tube 13. A second ring elastic body 18a is added to urge the movable piece 17 toward the inner centre side (position at which the movable piece 17 engages with the checking groove 12 of the first connecting member 4). The object of the present invention can be attained even if either of the ring elastic body 18 or the second ring elastic body 18a or both of them are omitted. It is a matter of course that the ring-shaped elastic body can be replaced with a leaf spring or other conventional elastic body.

A tubular body 20 is provided around the outer circumference of the checking groove 12 with some space left therebetween. The ring 21 which is integral with the first connecting member 4 supports the tubular body 20 through the medium of an axis 22 fixed to the tubular body 20 and a spring 23 put through the axis 22. Thus, there is provided a connecting and fixing tool 7 acting as a lock mechanism for maintaining the movable piece 17 having the divided ring in such state that it is inserted and locked in the checking groove 12 of the first connecting member 4.

In putting the connecting and fixing tool 7 in lock releasing state, by moving the tubular body 20 toward the side of the ring 21 against the force of the spring 23, the divided ring 16 is expanded toward the outer circumference and, as a result, engagement of the divided ring 16 with the checking groove 12 is released and the second connecting member 5 is made free to move.

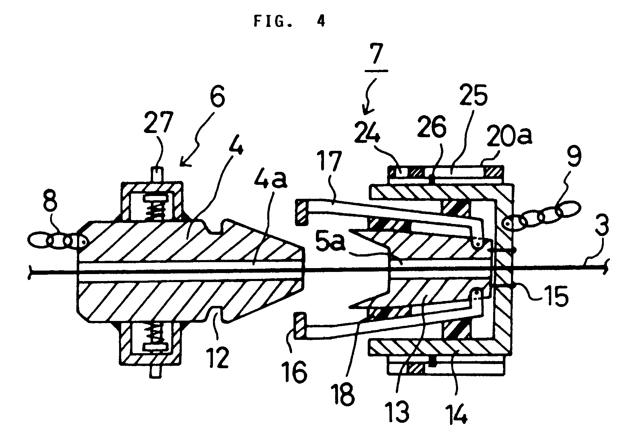

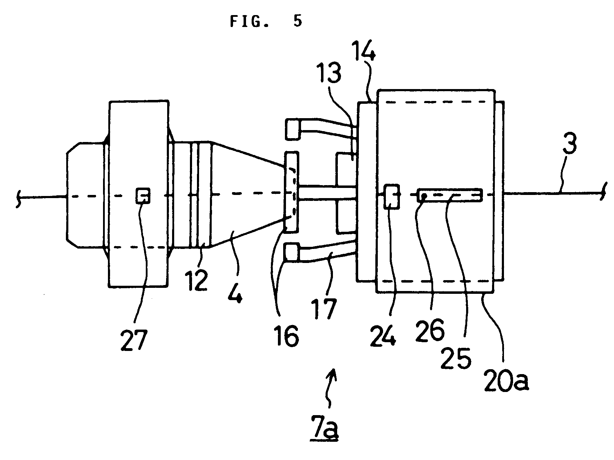

In the embodiment shown in Figures 4 and 5, a tubular body 20a is loosely fitted to the outer circumference of the second connecting member 5 and by engagement of a slit 25 made in the tubular body 20a with a pin 26 projecting from the outer tube 14 of the second connecting member 5, the tubular body is made movable in the axial direction of the second connecting member 5 and by providing a checking hole 27 which engages with the pin 26 projecting from the first connecting member, a connecting and fixing tool 7a which functions as lock mechanism is composed.

In mounting a tyre chain on a tyre, as shown in Figure 3 the first connecting member 4 and the second connecting member 5 are put in separated state. Therefore, the first connecting member 4, the second connecting member 5 and the connecting and fixing tool 7 of the contractile connector 2 are put in non-working state but the elastic body 3 is acting on both ends of the inside annular body 1. As a result by stretching the elastic body 3, the effective length of the inside annular body 1 can be increased and the inside annular body 1 can simply be fitted to the back side of the tyre.

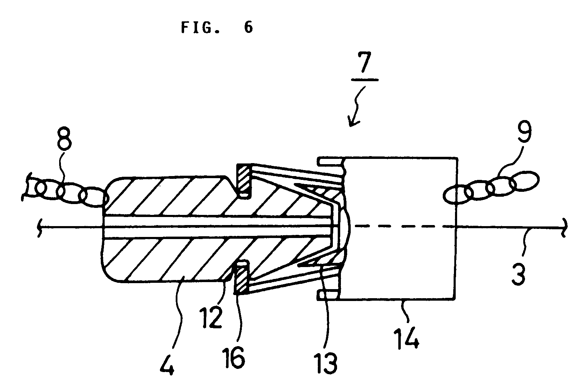

Then, as shown in Figure 6, by making the first connecting member 4 and the second connecting member 5 approach each other, the checking groove 12 of the first connecting member 4 and the divided ring 16 of the second connecting member 5 are put in engaged state. Then, by moving the tubular body 20 toward the first connecting member 4 through the guidance by the slit 25 and the pin 26, the tubular body 20 is put in locked state, and the first connecting member 4 and the second connecting member 5 are kept in the fixed state.

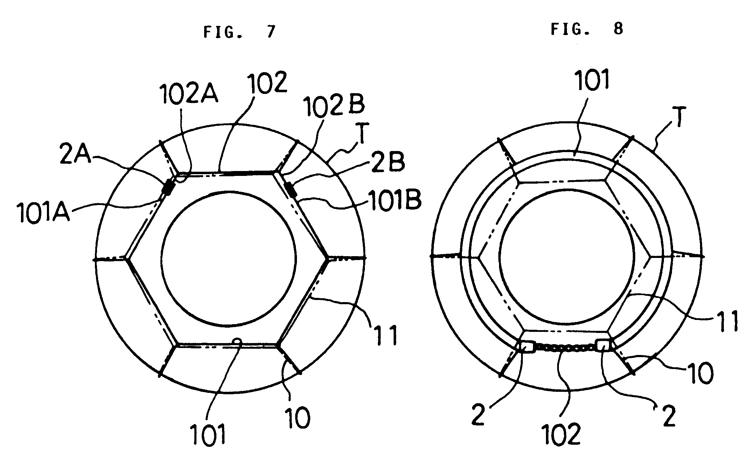

In this embodiment, the contractile connector is made single by connecting both ends of the inside annular body 1 by the contractile connector but it is a matter of course that the contractile connector can be provided at plural parts of the inside annular body 1. For example, in the second embodiment of the inside annular body 1 shown in Figure 7, the inside annular body 1 is divided into two, namely the first elastic body 1 composing the range of more than 180° of the inside annular body 1 and the second annular body 102 composing the range of less than 180° of the inside annular body 1.

By connecting one end 101A of the first annular body 101 and one end 102A of the second annular body 102 by a contractile connector 2A including the elastic body 3 whose both ends are connected to the one end 101A of the first annular body 101 and the one end 102A of the second annular body 102 and by connecting the other end 101B of the first annular body 101 and the other end 102B of the second annular body 102 by the contractile connector 2B including the elastic body 3 whose both ends are connected to the other end 101B of the first annular body 101 and the other end 102B of the second annular body 102, the first annular body 101 and the second annular body 102 are connected by two contractile connectors and thus the inside annular body 1 is composed.

In the third embodiment of the inside annular body 1 shown in Figure 8, the first annular body 101 composing the range of more than 180° of the inside annular body 1 is rigid curved rod-shaped and the second annular body 102 composing the range of less than 180° is of chain construction.

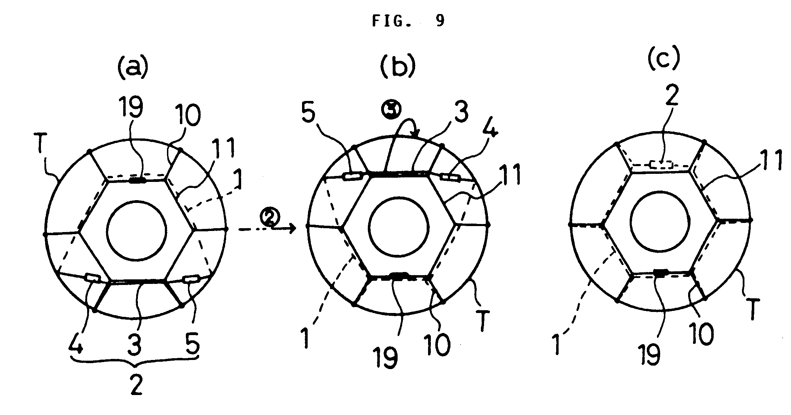

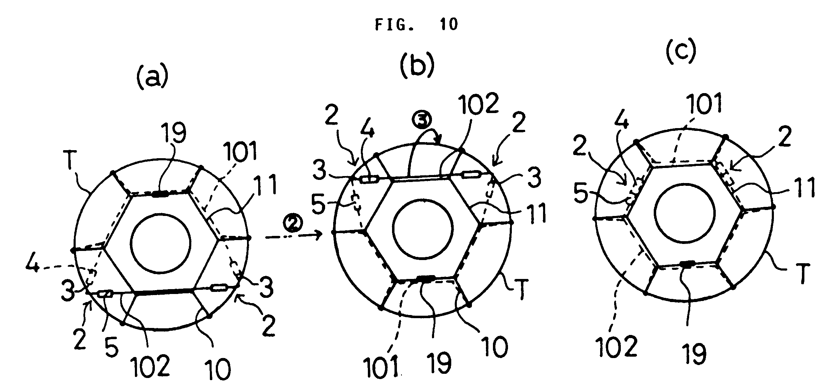

An explanation is made below on how to mount a tyre chain on a tyre according to the second aspect of the invention of the present application. In Figures 9 and 10, reference numeral 19 designates an upper mark of tyre chain.

In Figure 9,
(1) By putting the inside annular body 1 on the tyre T from the upper side of tyre (as if to pull on stocking), while keeping the elastic body 3 of the contractile connector 2 in stretched state, the range of more than 180° of the inside annular body 1 is located at the upper inside of the tyre and the remaining range of less than 180° of the inside annular body 1 is located at the lower outside of the tyre (refer to Figure 9a).
(2) By letting the tyre T make a half turn by moving a vehicle, the range of more than 180° of the inside annular body 1 located at the upper side of the tyre is moved to the lower inside of the tyre and the remaining part of the inside annular body 1 located at the lower outside of the tyre is moved to the upper outside of the tyre (refer to Figure 9b).
(3) Then, by moving the remaining part of the inside annular body 1 now located at the upper outside of the tyre to the inside of the tyre, the inside annular body 1 is located inside of the tyre in its entirety.
(4) When the inside annular body 1 was located inside of the tyre in its entirety, the contractile connector 2 is put in contracted and fixed state (refer to Figure 9c).

In the above way, mounting of a tyre chain on a tyre is completed and the inside annular body 1 of the tyre chain is fixed in contracted state.

Figure 10 shows how to mount a tyre chain of the second embodiment of the second invention of the present application. In this case, the inside annular body 1 comprises the first annular body 101 composing a range of more than 180° of the inside annular body 1 and the second annular body 102 composing a range of less than 180° of the inside annular body 1 and the tyre chain of the second embodiment of the first invention of the present application is used.

Mounting is achieved by the following procedure:
(1) The first annular body 101 is located at the upper inside of a tyre on which a tyre chain is mounted and the second annular body 102 is located at the lower outside of the tyre.
(2) By letting the tyre make a half turn by moving the vehicle, while the first annular body 101 which is located at the upper inside of the tyre is moved to the lower inside of the tyre, the second annular body 102 which is located at the lower outside of the tyre is moved to the upper outside of the tyre (refer to Figure 10b).
(3) Then, the second annular body 102 now located at the upper outside of the tyre is moved to the inside of the tyre and thus the inside annular body 1 is locate at the inside of the tyre in its entirety.
(4) For the inside annular body which is now located at the inside of the tyre in its entirety, the contractile connector 2 is put in contracted and fixed state (refer to Figure 10c).
Thus, mounting of the tyre chain on the tyre is completed. As compared with the first embodiment of Figure 9, in the case of the second embodiment of Figure 10 the elastic body 3 (elastic rope) of the contractile connector 2 is in a stretched state and is located at the side of the tyre in the above operation processes (1) and (2). Therefore, it is easy to locate the first annular body 101 inside the tyre and to locate the second annular body 102 outside the tyre, namely, opposite to each other in relation to the tyre.

In the case where the inside annular body 1 of the third embodiment shown in Figure 8 (only the second annular body 102 is made of chain structure and the first elastic body 101 is made of rigid curved rod body of U shape) is used, the inside annular body 1 hardly slips off when mounting it in the above operation process (1) and therefore mounting of the inside annular body 1 is easy.

When removing the tyre chain from the tyre, the lock mechanism of the connecting and fixing tool 7 of the contractile connector 2 is released so as to release the fixing of the first connecting member and the second connecting member and separate them from each other. Then, by carrying out the reverse of the mounting process shown in Figures 9 and 10, the tyre chain is removed from the tyre.

In the first aspect of the invention of the present application, when the tyre chain is in a used state, both ends of the inside annular body are connected through the medium of the first connecting member, the connecting and fixing tool and the second connecting member; the elastic body does not act; and the first connecting member and the second connecting member are maintained in connected and fixed state. Therefore, even if excessive force is applied to the chain by braking hard, slip, etc., the effective length of the inside annular body does not increase and there is no fear that the tyre chain is put in a non-working state.

Both ends of the inside annular body are connected through the medium of the elastic body and the inside annular body is kept in an annular state. Therefore, in mounting a tyre chain, the first connecting member and the second connecting member are movable along the elastic body and the effective length of the inside annular body is increased due to action by the elastic body. This facilitates connecting of the first connecting member and the second connecting member.

In the second aspect of the invention of the present application, in mounting a tyre chain, the inside annular body 1 is pulled on a tyre from the upper side of tyre, a part of the inside annular body is located at the outside of tyre, and the inside annular body is located in its entirely at the inside of the tyre by letting the tyre make a half turn and by moving the remaining part of the inside annular body 1 located at the upper outside of tyre toward the inside of the tyre.

Mounting of a tyre chain can be made very easy by locating a part of the inside annular body outside of the tyre at the start of tyre chain mounting.

## Claims

1. A tyre chain having an inside annular body (1) provided with a contractile connector which includes:
an elastic body (3) having a first end connected to a first end (1A) of the inside annular body and a second end connected to a second end (1B) of the inside annular body;
a first connecting member (4) which is connected to the first end (1A) of the inside annular body (1) and is movable along said elastic body (3);
a connecting chain (8) opposing ends of which are connected respectively to the first end (1A) of the inside annular body and the first connecting member (4);
a second connecting member (5) which is connected to the second end (1B) of the inside annular body (1) and is movable along said elastic body (3);
a further connecting chain (9) opposing ends of which are connected respectively to the second end (1B) of the inside annular body (1) and the second connecting member (5); and
a lock mechanism (12,16,17,20) arranged for connecting and fixing detachably the first connecting member (4) and the second connecting member (5) and for maintaining the connected and fixed state;
wherein, when the tyre chain is mounted on a tyre, the first end (1A) of the inside annular body (1) and the second end (1B) of the inside annular body are connected through the medium of the first connecting member (4), the connecting chain (8), the second connecting member (5), the further connecting chain (9) and the lock mechanism (12,16,17,20).

2. A tyre chain as claimed in Claim 1, wherein the elastic body (3) of the contractile connector is an elastic rope in which the connecting chain (8) and the further connecting chain (9) are inserted, by passing the elastic rope through the first connecting member (4) and the second connecting member (5) said first and second connecting members (4,5) are made movable along the elastic body when mounting the tyre chain on the tyre.

3. A tyre chain as claimed in either one of Claims 1 or 2, wherein the inside annular body (1) is divided into a first annular body (101) comprising a range of more than 180° of the inside annular body and a second annular body (102) comprising a range of less than 180° of the inside annular body, and wherein the inside annular body is constructed by connecting said first annular body (101) and said second annular body (102) into an annular shape by means of two contractile connectors (2A,2B).

4. A tyre chain as claimed in Claim 3, wherein said first annular body (101) comprising a range of more than 180° of the inside annular body is a rigid curved rod body and said second annular body (102) comprising a range of less than 180° of the inside annular body is a chain.

5. A method of mounting a tyre chain having an inside annular body (1) provided with a contractile connector on a tyre said method comprising the steps of:
locating a range of more than 180° of the inside annular body (101) at the upper inside of a tyre on which the tyre chain is mounted and locating the remaining range of less than 180° of the inside annular body (102) at the lower outside of the tyre;
putting the inside annular body on the tyre from the upper side of the tyre;
by letting the tyre make a half turn by moving the vehicle, moving the range of more than 180° of the inside annular body (101) located at the upper inside of the tyre to the lower inside of the tyre and moving the remaining part of the inside annular body (102) located at the lower outside of the tyre to the upper outside of the tyre;
moving the remaining part of the inside annular body (102) now located at the upper outside of the tyre to the inside of the tyre so as to locate the inside annular body at the inside of the tyre in its entirely;
and putting the contractile connector in a contracted state.

6. A method of mounting a tyre chain on a tyre as claimed in Claim 5, wherein at the start of tyre chain mounting, locating the first annular body (101) having a range of more than 180° of the inside annular body at the upper inside of the tyre on which the tyre chain is mounted, locating the second annular body (102) having a range less than 180° of the inside annular body at the lower inside of the tyre, putting the inside annular body on the tyre from the upper side of the tyre and locating the elastic bodies of the two contractile connectors (2A,2B) at the side of the tyre.

## Patentansprüche

1. Eine Gleitschutzkette , die einen inneren ringförmigen Körper (1) aufweist, der mit einem zusammenziehbaren Verbinder versehen ist, der einschließt:
einen elastischen Körper (3) mit einem ersten Ende, das an ein erstes Ende (1A) des inneren ringförmigen Körpers angeschlossen wird und ein zweites Ende, das an ein zweites Ende (1B) des inneren ringförmigen Körpers angeschlossen wird;
ein erstes Verbindungselement (4), das mit dem ersten Ende (1A) des inneren ringförmigen Körpers (1) verbunden wird und entlang dem besagten elastischen Körper (3) verschiebbar ist;
eine Verbindungskette (8) deren entgegengesetzte Enden mit dem ersten Ende (1A) des inneren ringförmigen Körpers bzw. dem ersten Verbindungselement (4) verbunden sind;
ein zweites Verbindungselement (5), das mit dem zweiten Ende (1B) des inneren ringförmigen Körpers (1) verbunden wird und entlang dem besagten elastischen Körper (3) verschiebbar ist;
eine weitere Verbindungskette (9) deren entgegengesetzte Enden mit dem zweiten Ende (1B) des inneren ringförmigen Körpers (1) bzw. mit dem zweiten Verbindungselement (5) verbunden sind; und
einen Verschlußmechanismus (12,16,17,20), der für das lösbare Verbinden und Befestigen des ersten Verbindungselements (4) und des zweiten Verbindungselements (5) und für das Aufrechterhalten des verbundenen und befestigten Zustands angeordnet ist;
worin, wenn die Gleitschutzkette auf einen Reifen montiert ist, das erste Ende (1A) des inneren ringförmigen Körpers (1) und das zweite Ende (1B) des inneren ringförmigen Körpers durch das Medium des ersten Verbindungselements (4), der Verbindungskette (8), des zweiten Verbindungselements (5), der weiteren Verbindungskette (9) und dem Verschlußmechanismus (12,16,17,20) verbunden sind.

2. Eine Gleitschutzkette nach Anspruch 1, worin der elastische Körper (3) des zusammenziehbaren Verbinders ein elastisches Seil ist, in das die Verbindungskette (8) und die weitere Verbindungskette (9) eingesetzt werden, indem man das elastische Seil durch das erste Verbindungselement (4) und das zweite Verbindungselement (5) fädelt, werden die besagten ersten und zweiten Verbindungselemente (4,5) entlang dem elastischen Körper verschiebbar gemacht, wenn die Gleitschutzkette auf den Reifen montiert wird.

3. Eine Gleitschutzkette wie in einem von beiden Ansprüchen 1 oder 2 beansprucht, worin der innere ringförmige Körper (1) in einen ersten ringförmigen Körper (101), der einen Bereich von mehr als 180° des inneren ringförmigen Körpers umfaßt und einen zweiten ringförmigen Körper (102), der einen Bereich von weniger als 180° des inneren ringförmigen Körpers umfaßt, geteilt ist, und worin der innere ringförmige Körper durch Verbinden besagten ersten ringförmigen Körpers (101) mit besagtem zweiten ring-förmigen Körper (102) mittels zweier zusammenziehbarer Verbinder (2A,2B) zu einer ringförmigen Gestalt montiert wird.

4. Eine Gleitschutzkette wie in Anspruch 3 beansprucht, worin besagter erster ringförmige Körper (101), der einen Bereich von mehr als 180° des inneren ringförmigen Körpers umfaßt, ein starrer, gebogener Stangenkörper ist und besagter zweiter ring-förmiger Körper (102), der einen Bereich von weniger als 180° des inneren ringförmigen Körpers umfaßt, eine Kette ist.

5. Ein Verfahren zur Montage einer Gleitschutzkette, die einen inneren ringförmigen Körper (1) aufweist, der mit einem zusammenziehbaren Verbinder versehen ist, auf einen Reifen, wobei das besagte Verfahren folgende Schritte umfaßt:
Befestigen eines Bereiches von mehr als 180° des inneren ring-förmigen Körpers (101) an die obere Innenseite eines Reifens an den die Gleitschutzkette montiert wird und Befestigen des restlichen Bereiches von weniger als 180° des inneren ringförmigen Körpers (102) an der unteren Außenseite des Reifens;
Anbringen des inneren ringförmigen Körpers an den Reifen von der oberen Seite des Reifens aus;
indem man den Reifen, durch Bewegen des Fahrzeugs, eine halbe Umdrehung machen läßt, wird der Bereich von mehr als 180° des inneren ringförmigen Körpers (101), der sich an der oberen Innenseite des Reifens befindet, auf die untere Innenseite des Reifens bewegt und der restliche Teil des inneren ringförmigen Körpers (102), der sich an der unteren Außenseite des Reifens befindet, wird zur oberen Außenseite des Reifens bewegt;
Bewegen des restlichen Teils des inneren ringförmigen Körpers (102), der sich jetzt an der oberen Außenseite des Reifens befindet, auf die Innenseite des Reifens, damit der innere ringförmige Körper in seiner Ganzheit auf die Innenseite des Reifens plaziert wird; und Versetzen des zusammenziehbaren Verbinders in einen zusammengezogenen Zustand.

6. Ein Verfahren zum Montieren einer Gleitschutzkette an einen Reifen wie in Anspruch 5 beansprucht, worin man, zu Beginn des Montierens der Gleitschutzkette, den ersten ringförmigen Körper (101), der einen Bereich von mehr als 180° des inneren ringförmigen Körpers umfaßt, an die obere Innenseite des Reifens, an dem die Gleitschutzkette montiert ist, befestigt, und den zweiten ringförmigen Körper (102), der einen Bereich von weniger als 180° des inneren ringförmigen Körpers umfaßt, an die untere Innenseite des Reifens befestigt, wobei der innere ring-förmige Körper von der Oberseite des Reifens aus auf den Reifen montiert wird, und Befestigen der elastischen Körper der beiden zusammenziehbaren Verbinder (2A,2B) an die Seite des Reifens.

## Revendications

1. Une chaîne anti-dérapante comportant un corps annulaire intérieur (1) et équipée d'un raccordeur contractile comprenant:
un corps élastique (3) comportant une première extrémité raccordée à la première extrémité (1A) du corps annulaire intérieur et une deuxième extrémité raccordée à la deuxième extrémité (1B) du corps annulaire intérieur;
un premier élément de raccordement (4) qui est raccordé à la première extrémité (1A) du corps annulaire intérieur (1) et qui est mobile le long dudit corps élastique (3);
une chaîne de raccordement (8) dont les extrémités opposées sont raccordées respectivement à la première extrémité (1A) du corps annulaire intérieur et au premier élément de raccordement (4);
un deuxième élément de raccordement (5) qui est raccordé à la deuxième extrémité (1B) du corps annulaire intérieur (1) et qui est mobile le long dudit corps élastique (3);
une chaîne de raccordement supplémentaire (9) dont les extrémités opposées sont raccordées respectivement à la deuxième extrémité (1B) du corps annulaire intérieur (1) et au deuxième élément de raccordement (5); et
un mécanisme de verrouillage (12,16,17,20) conçu pour pouvoir raccorder, verrouiller et relâcher le premier élément de raccordement (4) et le deuxième élément de raccordement (5) et pour garantir une position de raccordement fixe;
caractérisée par le fait que, lors du montage de la chaîne sur un pneumatique, la première extrémité (1A) du corps annulaire intérieur (1) et la deuxième extremité (1B) du corps annulaire intérieur sont raccordés par l'intermédiaire du premier élément de raccordement (4), de la chaîne de raccordement (8), du deuxième élément de raccordement (5), de la chaîne de raccordement supplémentaire (9) et du mécanisme de verrouillage (12,16,17,20).

2. Une chaîne anti-dérapante ainsi revendiquée à la revendication 1, dans laquelle le corps élastique (3) du raccordeur contractile est une corde élastique dans laquelle sont introduites la chaîne de raccordement (8) et la chaîne de raccordement supplémentaire (9), et dans laquelle, lorsque l'on fait passer la corde élastique à travers le premier élément de raccordement (4) et le deuxième élément de raccordement (5), lesdits premier et deuxième éléments (4,5) sont mobiles le long du corps élastique lors du montage de la chaîne.

3. Une chaîne anti-dérapante ainsi revendiquée dans l'une ou l'autre des revendications 1 ou 2, dans laquelle le corps annulaire intérieur (1) est divisé en un premier corps annulaire (101) représentant plus de 180° du corps annulaire intérieur et un deuxième corps annulaire (102) formant moins de 180° du corps annulaire intérieur, et dans laquelle le corps annulaire intérieur est formé du raccordement desdites premier corps annulaire (101) et deuxième corps annulaire (102) sous une forme annulaire et par le biais de deux raccordeurs contractiles (2A,2B).

4. Une chaîne anti-dérapante ainsi revendiquée dans la revendication 3, dans laquelle ledit premier corps annulaire (101) représentant plus de 180° du corps annulaire intérieur est une tige rigide et courbée et ledit deuxième corps annulaire (102) formant moins de 180° du corps annulaire intérieur est une chaîne. du pneumatique.

5. Une méthode de montage sur un pneumatique d'une chaîne anti-dérapante comportant un corps annulaire intérieur (1) équipé d'un raccordeur contractile, ladite méthode comprenant les étapes consistant à:
placer l'élément formant plus de 180° du corps annulaire intérieur (101) sur la partie intérieure supérieure du pneumatique sur lequel on monte la chaîne et placer la partie restante, inférieure à 180° (102), du corps annulaire intérieur sur la partie extérieure inférieure du pneumatique;
faire faire un demi-tour au pneumatique (en déplaçant le véhicule) afin de déplacer la partie formant plus de 180° du corps annulaire intérieur (101) située sur la partie intérieure supérieure du pneumatique vers la partie intérieure inférieure du pneumatique et de déplacer la partie restante, formant moins de 180° du corps annulaire intérieur (102) située sur la partie extérieure inférieure du pneumatique vers la partie extérieure supérieure du pneumatique;
déplacer la partie restante du corps annulaire intérieur (102) à présent située sur la partie extérieure supérieure du pneumatique vers le côté intérieur du pneumatique, en sorte que l'intégralité du corps annulaire intérieur soit positionnée sur la partie intérieure du pneumatique;
et mettre le raccordeur contractile en position contractée.

6. Une méthode de montage d'une chaîne anti-dérapante sur un pneumatique ainsi revendiquée dans la revendication 5, dans laquelle au début du montage de la chaîne, on place le premier corps annulaire (101) représentant plus de 180° du corps annulaire intérieur sur la partie intérieure supérieure du pneumatique sur lequel on monte la chaîne anti-dérapante, on place la partie restante, inférieure à 180° (102), du corps annulaire intérieur sur la partie intérieure inférieure du pneumatique, on installe le corps annulaire intérieur depuis le haut du pneumatique et on dispose les corps élastiques des deux raccordeurs contractiles (2A,2B) sur le côté du pneumatique.
